# EUROPÄISCHE PATENTSCHRIFT

(11) **EP 1 238 762 B1**
(45) Veröffentlichungstag und Bekanntmachung des Hinweises auf die Patenterteilung: **14.04.2004**
(21) Anmeldenummer: 02002485.7
(22) Anmeldetag: 02.02.2002
(51) Int. Cl.: B25H 1/00, B23D 47/02, B27B 27/08, B27B 25/10

(54) **Sägetisch**
Saw bench
Table de sciage

(30) Priorität: 15.02.2001 DE 10107495
(43) Veröffentlichungstag der Anmeldung: 11.09.2002
(73) Patentinhaber: Wolfcraft GmbH, 56746 Kempenich (DE)
(72) Erfinder: Degen, Klemens, 56745 Weibern (DE); Strang, Markus, 56651 Niederzissen (DE)
(74) Vertreter: Grundmann, Dirk, Dr.

(56) Entgegenhaltungen:
- EP-A- 0 283 553
- EP-A- 0 391 115
- WO-A-00/43155
- DE-A- 10 000 102
- DE-B- 2 630 453
- US-A- 5 617 909

## Beschreibung

Die Erfindung betrifft einen Sägetisch mit einer horizontalen Aufspannplatte für die Säge, mit einer parallel zur Schnittrichtung sich erstreckenden ersten Führungsnut mit hinterschnittenen Wänden zur verschieblichen Aufnahme einer in die Hinterschneidungen greifende Randabschnitte aufweisenden Führungsschiene eines Anschlages und mit einer quer zur Schnittrichtung sich erstreckenden zweiten Führungsnut mit hinterschnittenen Wänden zur verschieblichen und festlegbaren Aufnahme der Führungsschiene des Anschlages, wobei der Anschlag eine an einer Schwenkkonsole befestigte Anschlagschiene aufweist, und die Schwenkkonsole um eine Schwenkachse gegenüber der Führungsschiene verschwenkbar und in einer 90°-Schwenkstellung verrastbar ist, wobei eine eine Bogennut der Schwenkkonsole durchgreifende, der Führungsschiene zugeordnete Feststellschraube vorgesehen ist, zur reibschlüssigen Fixierung der Schwenkstellung der Schwenkkonsole zur Führungsschiene.

Sägetische mit einer ersten Führungsnut, in welcher ein Winkelanschlag führbar ist und mit einer zweiten Führungsnut, in welcher ein Parallelanschlag fixierbar ist, sind bekannt.

Ein Sägetisch gemäß dem Oberbegriff der unabhängigen Anspruchs 1 ist aus dem Dokument DE 2 630 453 B bekannt.

Aus der EP 0 391 115 ist ein Sägetisch bekannt, welcher eine Aufspannplatte für eine Säge aufweist. Die Säge kann unter die Aufspannplatte geschraubt werden, wozu die Aufspannplatte um eine Schwenkachse aufschwenkbar ist. Benachbart zur Aufspannplatte befindet sich eine Werkplatte. Etwa parallel zur Schwenkachse der Aufspannplatte befindet sich dort eine Führung, auf welcher ein Schlitten in Parallelrichtung zur Schnittrichtung der Säge verlagerbar ist. Der Schlitten trägt eine Schwenkkonsole, die wiederum eine Anschlagschiene trägt, die in verschiedenen Schwenkstellungen zum Schlitten fixierbar ist.

Der Erfindung liegt die Aufgabe zugrunde, einen gebrauchsvorteilhaften Sägetisch anzugeben.

Gelöst wird die Aufgabe durch die in dem unabhängigen Anspruch 1 angegebene Erfindung.

Der Anspruch 1 sieht zunächst und im Wesentlichen vor, dass das vertikale Bewegungsspiel der Führungsschiene in der ersten Nut größer ist, als das in der zweiten, so dass der Anschlag in der ersten Nut mit in einer Winkelstellung an die Führungsschiene gefesselten Schwenkkonsole frei verschieblich ist, und in der zweiten Nut zufolge einer beim Festziehen der Feststellschraube erfolgenden Reibschlussanlage der Randabschnitte der Führungsschiene an die Nutwände lagefixiert ist. Um seine Funktion zu tauschen, muss er lediglich von der Stirnseite her aus einer der beiden Nuten herausgezogen werden, um, wiederum von der Stirnseite her, in die andere Nut hineingesteckt zu werden. Liegt die Führungsschiene in der ersten Nut ein, in welcher sie ein größeres vertikales Bewegungsspiel besitzt, so kann die Schwenkkonsole durch Festziehen der Feststellschraube reibschlüssig mit der Führungsschiene verbunden werden. Die Randabschnitte der Führungsschiene haben in dieser Position noch ein genügendes Spiel zu den Wänden der ersten Nut, so dass der Anschlag frei in dieser parallel zur Schnittrichtung verlaufenden Nut verschieblich ist. Wird die Führungsschiene samt Konsole und Anschlagschiene in die zweite Nut hineingeschoben, so wird der Anschlag als Parallelanschlag verwendet. Die Schwenkkonsole ist in dieser Stellung mit der Führungsschiene schwenkverrastet. Wird jetzt die Feststellschraube festgezogen, so verspannt sich die Führungsschiene in der Nut. Dies erfolgt dadurch, dass die Schwenkkonsole fest auf den Nutrand gespannt wird und die Randabschnitte der Führungsschiene gegen die Nutwände gespannt werden, so dass eine reibschlüssige Fixierung vorliegt. In einer bevorzugten Ausgestaltung ist neben der Aufspannplatte eine Werkplatte vorgesehen. In dieser Werkplatte ist die erste Nut angeordnet. Die zweite Nut braucht ebenfalls nicht der Aufspannplatte selbst zugeordnet sein. Sie kann einer benachbart zur Aufspannplatte angeordneten Profilschiene zugeordnet sein. Die Schiene kann an demjenigen Träger befestigt sein, an dem auch die Aufspannplatte festliegt. Die Schwenkkonsole kann aus Kunststoff bestehen. Sie kann als Spritzgussteil gefertigt sein. Ihre Rückseite kann eine Höhlung besitzen, die mit Rippen versteift ist. Die Stirnseiten der Höhlungswände können auf der Werkplatte gleiten, wenn der Anschlag der ersten Nut zugeordnet ist. Die Stirnseiten der Höhlungswände können gegen die Nutränder der zweiten Nut verspannbar sein. Die Schwenkachse, um welche die Schwenkkonsole gegenüber der Führungsschiene schwenkbar ist, wird bevorzugt von einem Schwenkzapfen ausgebildet, der in einer Bohrung der Führungsschiene steckt. Die Anschlagschiene ist bevorzugt mit der Schwenkkonsole derart verschraubt, dass sie nach Lösen der Schrauben entlang ihrer Erstreckungsrichtung verschiebbar ist. Hierzu kann die Anschlagschiene eine C-förmige Befestigungsnut aufweisen. In diese greift eine Rippe der Schwenkkonsole, so dass sie auch bei gelösten Befestigungsschrauben, deren Köpfe lediglich in Taschen einliegen, an die Anschlagschiene gefesselt ist. Die Befestigungsschrauben greifen bevorzugt in Muttern, welche in der Befestigungsnut verschieblich einliegen. Die randoffenen Taschen, in denen die Köpfe der Befestigungsschrauben einliegen, erlauben eine einfachere Montage. Die Verrastung der Schwenkkonsole in der 90°-Stellung erfolgt mittels eines Raststiftes. Dieser Raststift sitzt in einer Raststifthalterung, die lagejustierbar ist. Der Raststift ist federbelastet und ragt in der Raststellung mit seinem Kopf in einen Zwischenraum, der zwischen zwei Rippen angeordnet ist. Die beiden Rippen sind einer Umfangsbogenfläche der Schwenkkonsole zugeordnet. In seiner zurückgezogenen Stellung ist der Raststift lagefixierbar. Hierzu besitzt der Raststift eine Distanzrippe, die nach einer 90°-Drehung des Raststiftes vor einer Stufe liegt. Der Sägetisch besitzt zumindest zwei gelenkig am Träger angebrachte Beinpaare, die in eine Parallellage zueinander und zum Träger bringbar sind, so dass der Tisch zusammenfaltbar ist.

Ein Ausführungsbeispiel der Erfindung wird nachfolgend anhand beigefügter Figuren erläutert. Es zeigen:
- Fig. 1: das Ausführungsbeispiel in der Seitenansicht,
- Fig. 2: das Ausführungsbeispiel in der Draufsicht mit auf der rechten Seite des Sägeblattes als Parallelanschlag befestigtem Anschlag,
- Fig. 3: eine Darstellung gemäß Fig. 2 mit auf der linken Seite der Säge angeordnetem Parallelanschlag,

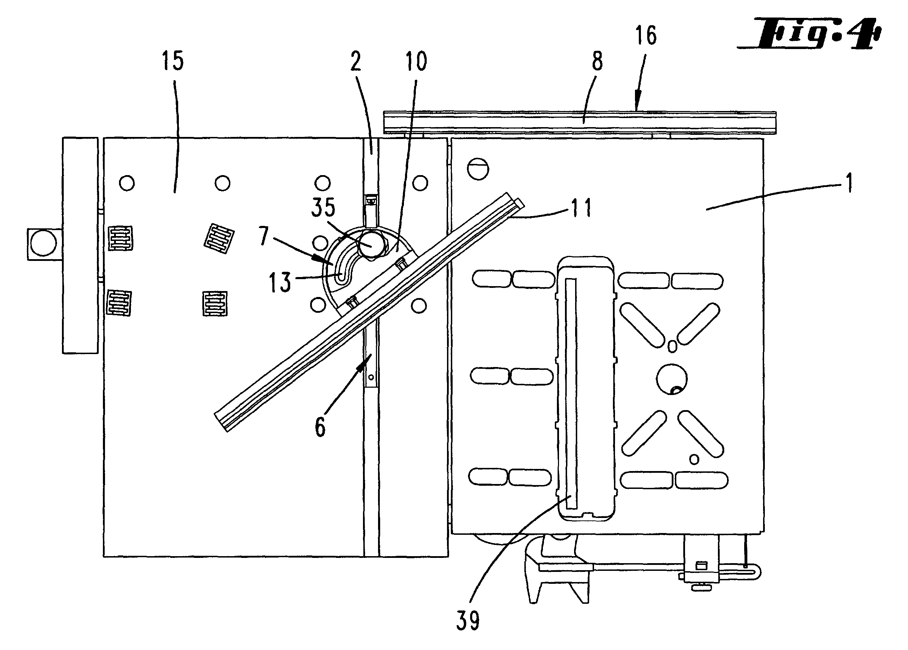

- Fig. 4: eine Draufsicht, mit dem Anschlag in der Funktion eines Winkelanschlages,
- Fig. 5: in vergrößerter Darstellung den Anschlag im Bereich seiner Schwenkkonsole,
- Fig. 6: eine Stirnansicht auf die der Parallelanschlagstellung zugeordneten ersten Führungsnut,
- Fig. 7: eine ähnliche Darstellung gemäß Fig. 6, bei dem der Anschlag der zweiten Führungsnut in Funktion eines Winkelanschlages zugeordnet ist und

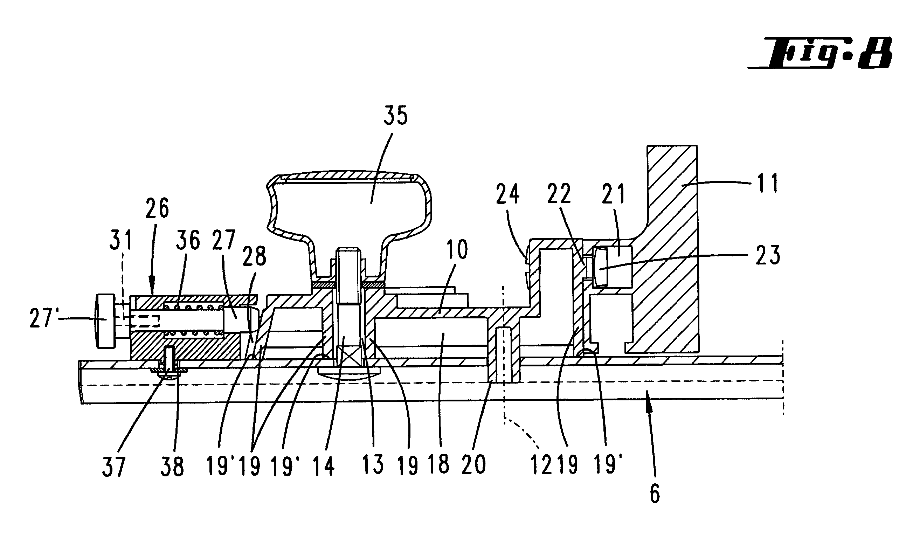

- Fig. 8: einen Schnitt gemäß der Linie VIII-VIII in Fig. 5.

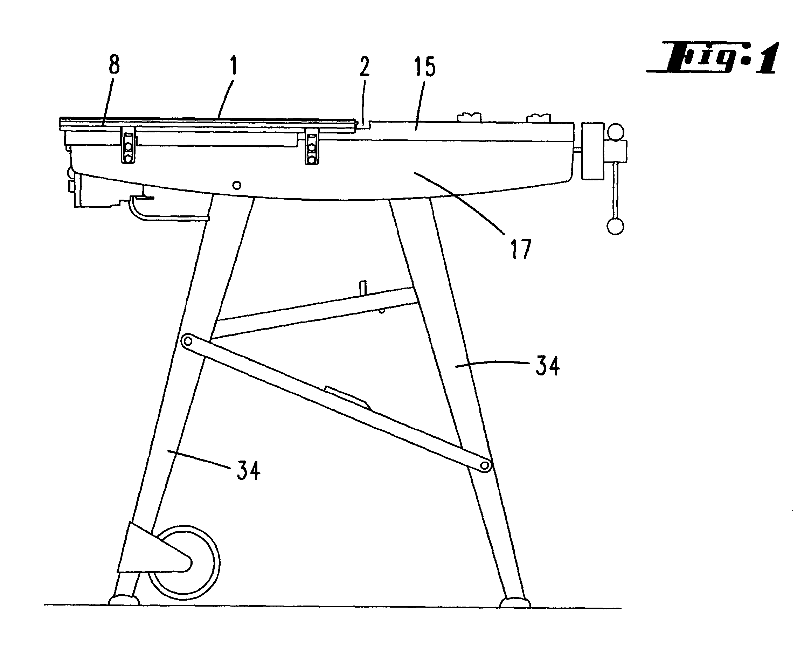

Der erfindungsgemäße Sägetisch, wie er in Fig. 1 in der Seitenansicht gezeigt ist, besitzt zwei Beinpaare 34, die mittels Querverstrebungen miteinander verbunden sind. Die beiden Beinpaare 34 tragen einen aus zwei Holmen bestehenden Träger 17. Zwischen den beiden Holmen erstrecken sich nebeneinanderliegend eine Aufspannplatte 1 und eine Werkplatte 15. Es kann vorgesehen sein, dass die Beinpaare 34 zur platzsparenden Verwahrung des Sägetisches in eine Parallellage zum Träger 17 geschwenkt werden können. Die Aufspannplatte 1 kann um eine nicht dargestellte Schwenkachse um etwa 180° aufgeschwenkt werden, um auf der Unterseite der Aufspannplatte 1 eine nicht dargestellte Säge zu befestigen, deren Kreissägeblatt durch einen Schlitz 39 der Aufspannplatte hindurchragt (vergl. EP 0 391 115).

In Parallelrichtung zum Schlitz 39 erstreckt sich eine Führungsnut 2 innerhalb der Werkplatte 15. Quer zur Führungsnut 2 erstreckt sich vor der Aufspannplatte 1 eine weitere Führungsnut 8, die einer Führungsschiene 6 zugeordnet ist, die mit Befestigungsmitteln am Träger 17 befestigt ist.

Beide Nuten 2, 8 besitzen einen hinterschnittenen Querschnitt.

Die Nut 2 besitzt Nutwände 3, die rechteckförmige Hinterschneidungen 4 ausbilden, in welche Randabschnitte 5 einer Führungsschiene 6 hineinragen. Die Nut kann aber auch ein V-förmiges Profil aufweisen. Die Randabschnitte 5 ragen schräg in die rechteckförmigen Hinterschneidungen hinein.

Auch die zweite Führungsnut 8, die der Profilschiene 16 zugeordnet ist, besitzt Hinterschneidungen 9', die der Nutwand 9 zugeordnet sind. Die Nut ist hier als V-Nut ausgestaltet.

Die Führungsschiene 6 kann jeweils nur in Erstreckungsrichtung in die Nut 2, 8 eingeschoben werden. Dabei besitzen die Randabschnitte 5 in der Nut 2 ein größeres vertikales Spiel, als in der Nut 8. Dies hat zur Folge, dass sich bei geeigneter Fesselung, wie sie weiter unten noch beschrieben wird, die Randabschnitte 5 reibschlüssig an die Nutwände 9' anlegen können. Bei der Nut 2 ist eine derartige reibschlüssige Fesselung nicht vorgesehen. In dieser Nut, in der der Anschlag 7 die Funktion eines Winkelanschlages hat, ist die Führungsschiene immer verschieblich.

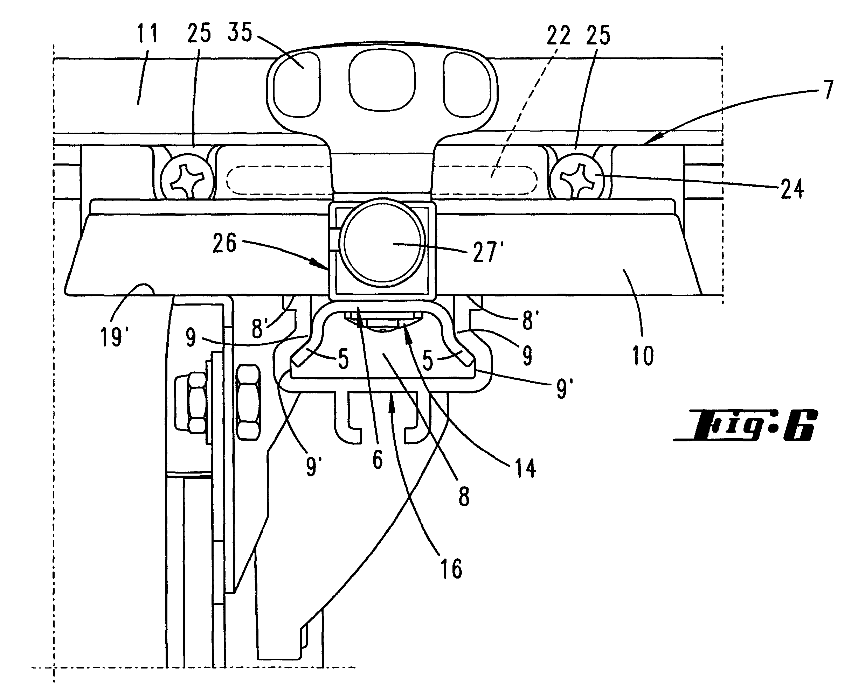

In einer etwa in der Mitte der Führungsschiene 6 angeordnete Bohrung ragt der Schwenkzapfen 20 einer aus Kunststoff gefertigten Schwenkkonsole 10 ein. Die Schwenkkonsole 10 ist rückwärtig hohl ausgebildet. Sie besitzt Höhlungen 18. Die Höhlungswände 19 können mit ihren Stirnseiten 19' auf der Führungsschiene 6 aufliegen. Die Schwenkkonsole 10 besitzt eine Bogennut 13, durch welche eine Feststellschraube 14 ragt, deren Kopf in der Höhlung der Führungsschiene steckt. Auf das aus der Bogennut 13 herausragende Gewinde der Feststellschraube 14 ist ein Knauf 35 mit einer Mutter aufgeschraubt, so dass durch Festziehen des Knaufes 35 die Stirnseiten 19' der Höhlungswände 19 auf die Ränder 8' der Führungsnut 8 gespannt werden, wenn die Randabschnitte 5 gegen die Nutwand 9 gespannt wird. In diesem, in Fig. 6 dargestellten Zustand befindet sich zwischen der Oberseite der Führungsschiene 6 und der Stirnwand 19' ein Luftspalt.

Die Schwenkkonsole 10 besitzt einen Fortsatz, der eine Rippe 22 aufweist. Diese Rippe 22 ragt in die Spaltöffnung einer Befestigungsnut 21 mit C-förmigem Querschnitt, die einer Anschlagschiene 11 zugeordnet ist. In der Befestigungsnut 21 befinden sich Muttern 23, in welche Befestigungsschrauben 24 eingeschraubt sind, die sich beidseitig der Rippe 22 befinden. Dort bildet der Fortsatz der Schwenkkonsole 10 nach oben offene Taschen 25 aus, in welchen die Köpfe 24' der Befestigungsschrauben 24 einliegen. Dies vereinfacht die Montage und das Verschieben der Anschlagschiene 11 in Erstreckungsrichtung derselben gegenüber der Schwenkkonsole 10 bei gelösten Befestigungsschrauben 24. Wenn die Befestigungsschrauben 24 lose in den Muttern 23 eingedreht sind, hält die Rippe 22 die Anschlagschiene 11 an der Schwenkkonsole 10.

Im Bereich des Scheitels der von einer Umfangsbogenfläche 29 mit leicht konischer Form umgebenen Bogennut 13 befindet sich ein Raststifthalter 26, welcher mittels einer Befestigungsschraube 37 mit der Schiene 6 verschraubt ist. Die Befestigungsschraube 37 durchgreift dabei ein quer zur Schienenerstreckungsrichtung sich erstreckendes Langloch 38, so dass eine Justierung der 90°-Winkelstellung der Anschlagschiene gegenüber der Führungsschiene 6 möglich ist, wenn der Raststift 27 in seiner der Umfangsbogenfläche 29 zugeordneten Rastausnehmung einliegt.

Die Rastausnehmung wird von einem Abstandsraum 30 gebildet, welcher von zwei Rippen 28 flankiert ist.

Der Raststift 27 besitzt einen Kopf, der beaufschlagt von einer in einer Kammer des Raststifthalters 26 einliegenden Druckfeder 36 in diesen Abstandsraum 30 einragen kann. Auf der dem Kopf gegenüberliegenden Seite besitzt der Raststift 27 ein Betätigungsende 27'. Dieses Betätigungsende 27' besitzt eine Distanzrippe 31. Durch Verschwenken des Betätigungsendes 27' kann die Distanzrippe 31 entweder in eine längere Ausweichnut 32 eintauchen, die der Raststellung entspricht, oder in eine kürzere Rastaussparung 33, die der zurückgezogenen Raststiftstellung entspricht.

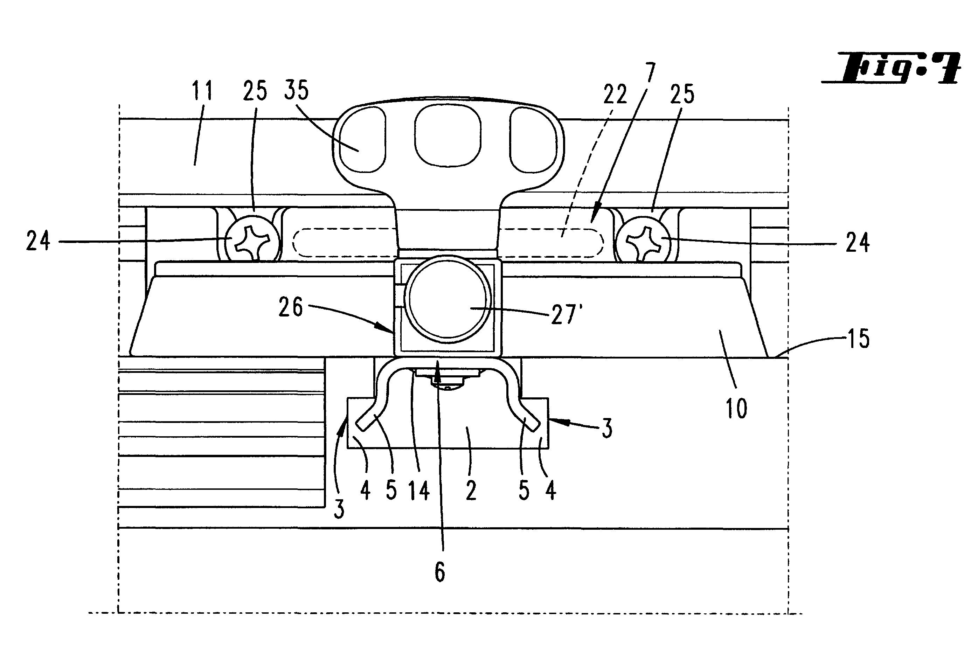

Bei zurückgezogenem Raststift 27 und gelöster Feststellschraube 14 kann die Schwenkkonsole 10 um die Schwenkachse 12 geschwenkt werden. Dies ist erforderlich, wenn der Anschlag 7 als Winkelanschlag verwendet werden soll. Zum Fixieren der Winkelstellung wird sodann der Knauf 35 gedreht, bis sich die Stirnseiten 19' der Höhlungswände 19 gegen die Oberseite der Führungsschiene 6 verspannen. Dann ist die Winkelstellung fixiert. In dieser Verspannstellung, die in der Fig. 7 dargestellt ist, besitzen die Randabschnitte 5 der Führungsschiene 6 einen Abstand zu der Nutwand 3 der Führungsnut 2, die sich parallel zum Schlitz 39 erstreckt, so dass die Führungsschiene 6 in der Nut 2 verschieblich ist, wobei die Stirnseiten 19' auf der Oberfläche der Werkplatte 15 gleiten.

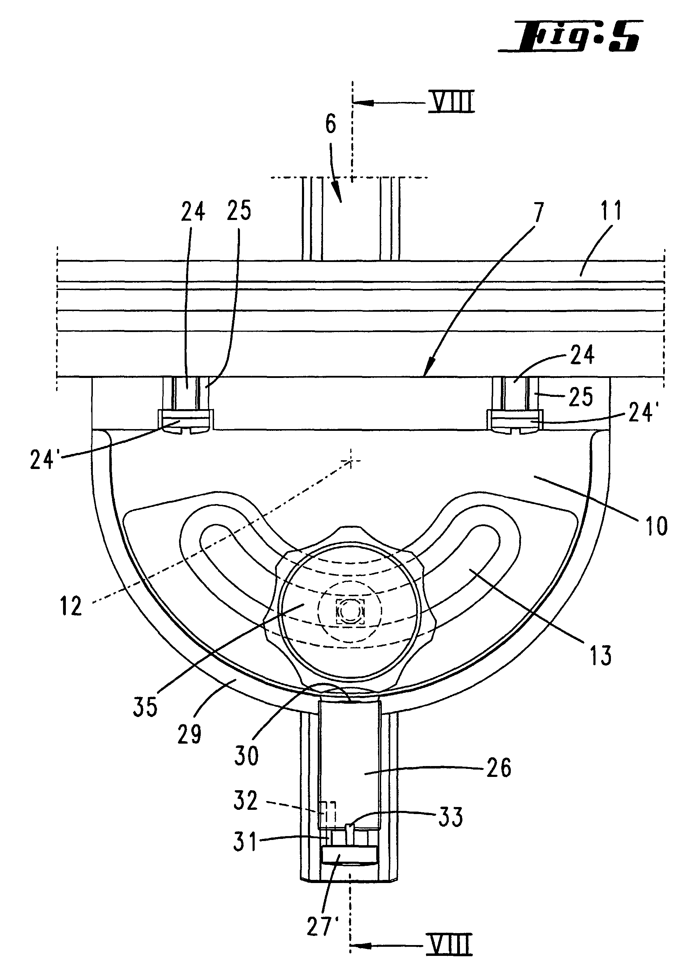

Zur Verwendung des Anschlages 7 als Parallelanschlag wird der Raststift 27 derartig gedreht, dass die Distanzrippe 31 in die Ausweichnut 32 eingreift. Die Schwenkkonsole 10 wird dazu in die in Fig. 5 dargestellte 90°-Stellung geschwenkt, so dass der Raststift 27 in den die Rastaussparung ausbildenden Abstandsraum 30 zwischen den beiden Rippen 28 tritt. Die 90°-Stellung bleibt auf diese Weise auch bei gelöster Feststellschraube 14 erhalten. Bei gelöster Feststellschraube 14 kann der Anschlag 7 in der zum Schlitz 39 verlaufenden Nut 8 geführt werden. Um den Anschlag 7 mit parallel zum Schlitz 39 ausgerichteter Anschlagschiene 11 relativ zum Schlitz 39 zu fixieren, wird der Knauf 35 gedreht, bis sich die Stirnseiten 19' der Höhlungswände 19 gegen den Rand 8' der Führungsnut 8 verspannen. Dies ist in der Fig. 6 dargestellt.

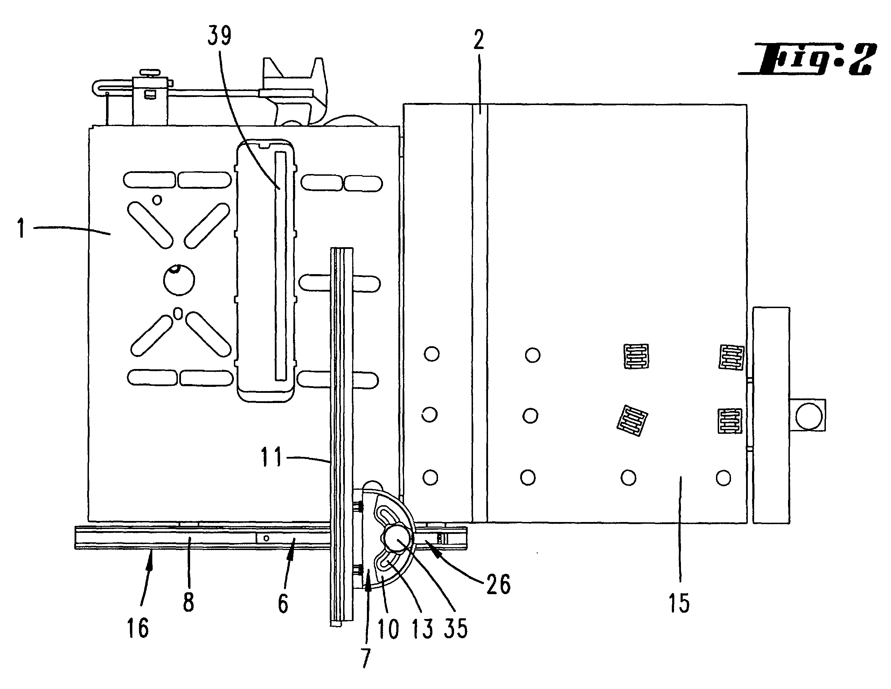

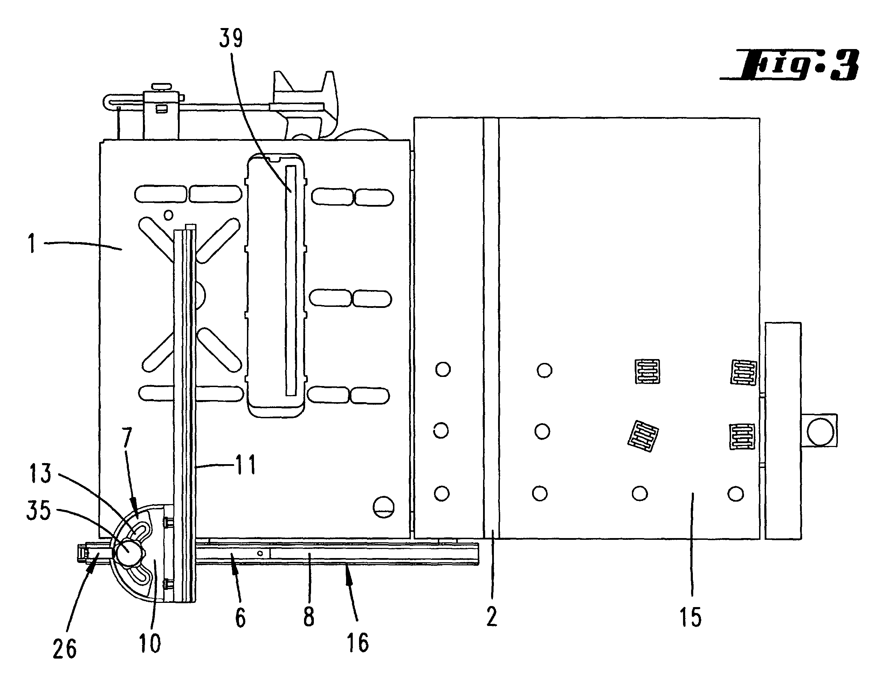

Um die Anschlagschiene 11 gegenüber der Schwenkkonsole 10 in der Erstreckungsrichtung der Anschlagschiene 11 zu verschieben, bspw. um -ausgehend von der in Fig. 2 dargestellten Parallelanschlagstellung- die in Fig. 3 dargestellte Parallelanschlagstellung zu erreichen, werden die Befestigungsschrauben 24 losgedreht, so dass die reibschlüssige Halterung der Anschlagschiene 11 an der Schwenkkonsole 10 aufgehoben ist. Nach Verlagern der Anschlagschiene 11 in die gewünschte Position können die Befestigungsschrauben 24 wieder festgedreht werden, so dass die reibschlüssige Verbindung zwischen Anschlagschiene 11 und Schwenkkonsole 10 hergestellt ist.

Während die Anschlagschiene 11 aus Metall gefertigt ist, kann die Schwenkkonsole 10 als Kunststoffteil gefertigt sein. Die Aufspannplatte 1 kann von einem Blechteil ausgebildet werden. Die Werkplatte 15 wird bevorzugt von einer MDF-Platte oder einer Holzplatte gebildet, in die weitere Befestigungselemente für die Werkstücke vorgesehen sind. Insbesondere kann die Werkplatte 15 Löcher besitzt, zum Einstecken von Werkstückhalterungsorganen. Schließlich kann dem Träger 17 ein Schraubstock zugeordnet sein. Der Aufspannplatte 1 können in den Zeichnungen nur angedeutete Schutzvorrichtungen zugeordnet sein, um haubenartig den Schlitz 39 zu überdecken. An dieser Haube kann auch ein Absaugschlauch zur Spanabsaugung angeschlossen werden.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Sägetisch mit einer horizontalen Aufspannplatte (1) für die Säge, mit einer parallel zur Schnittrichtung sich erstreckenden ersten Führungsnut (2) mit hinterschnittenen Wänden (3) zur verschieblichen Aufnahme einer in die Hinterschneidungen (4) greifende Randabschnitte (5) aufweisenden Führungsschiene (6) eines Anschlages (7) und mit einer quer zur Schnittrichtung sich erstreckenden zweiten Führungsnut (8) mit hinterschnittenen Wänden (9) zur verschieblichen und festlegbaren Aufnahme der Führungsschiene (6) des Anschlages (7), wobei der Anschlag (7) eine an einer Schwenkkonsole (10) befestigte Anschlagschiene (11) aufweist und die Schwenkkonsole (10) um eine Schwenkachse (12) gegenüber der Führungsschiene (6) verschwenkbar und in einer 90°-Schwenkstellung verrastbar ist, wobei eine eine Bogennut (13) der Schwenkkonsole (10) durchgreifende, der Führungsschiene (6) zugeordnete Feststellschraube (14) vorgesehen ist, zur reibschlüssigen Fixierung der Schwenkstellung der Schwenkkonsole (10) zur Führungsschiene (6), **dadurch gekennzeichnet, dass** das vertikale Bewegungsspiel der Führungsschiene (6) in der ersten Nut (2) größer ist, als das in der zweiten (8), so dass der Anschlag in der ersten Nut (2) mit in einer Winkelstellung an die Führungsschiene (6) gefesselten Schwenkkonsole (10) frei verschieblich ist, und in der zweiten Nut (8) zufolge einer beim Festziehen der Feststellschraube (14) erfolgenden Reibschlussanlage der Randabschnitte (5) der Führungsschiene (6) an die Nutwände (9) lagefixiert ist.

2. Sägetisch nach Anspruch 1, **gekennzeichnet durch** eine der Aufspannplatte (1) benachbarte Werkplatte (15), welcher die erste Nut (2) zugeordnet ist.

3. Sägetisch nach einem der vorhergehenden Ansprüche oder insbesondere danach, **dadurch gekennzeichnet, dass** die zweite Nut (8) einer benachbart zur Aufspannplatte (1) angeordneten Profilschiene (16) zugeordnet ist.

4. Sägetisch nach Anspruch 3, **dadurch gekennzeichnet, dass** die Schiene (16) an einem die zur Montage der Säge an ihrer Unterseite schwenkbaren Aufspannplatte (1) tragenden Träger (17) befestigt ist.

5. Sägetisch nach einem der vorhergehenden Ansprüche, **dadurch gekennzeichnet, dass** die Schwenkkonsole (10) aus Kunststoff besteht und eine hohle Rückseite (18) besitzt, wobei die Stirnseiten (19') der Höhlungswände (19) auf der Werkplatte (15) gleiten bzw. gegen die Nutränder (8') der zweiten Nut (8) verspannbar sind.

6. Sägetisch nach einem der vorhergehenden Ansprüche, **gekennzeichnet durch** einen in die Führungsschiene (6) ragenden Schwenkzapfen (20) der Schwenkkonsole (10).

7. Sägetisch nach einem der vorhergehenden Ansprüche, **dadurch gekennzeichnet, dass** die Anschlagschiene (11) in ihrer Erstreckungsrichtung verschiebbar an der Schwenkkonsole (10) befestigt ist.

8. Sägetisch nach einem der vorhergehenden Ansprüche, **dadurch gekennzeichnet, dass** die Anschlagschiene (11) eine C-förmige Befestigungsnut (21) aufweist, in welche eine Rippe (22) der Schwenkkonsole (10) ragt und Muttern (23) einliegen, in welche Befestigungsschrauben (24) eingeschraubt sind.

9. Sägetisch nach Anspruch 8, **dadurch gekennzeichnet, dass** die Köpfe der Befestigungsschrauben (24) in randoffenen Taschen (25) der Schwenkkonsole (10) liegen.

10. Sägetisch nach einem der vorhergehenden Ansprüche, **dadurch gekennzeichnet, dass** die Führungsschiene (5) einen lagejustierbaren Raststifthalter (26) trägt, dessen federbelasteter Raststift (27) in einer rückgezogenen Stellung fixierbar ist und mit einem zwischen zwei Rippen (28) angeordneten Abstandsraum (30) einer Umfangsbogenfläche (29) der Schwenkkonsole (10) verrastbar ist.

11. Sägetisch nach Anspruch 10, **dadurch gekennzeichnet, dass** der Raststift (27) zum Verrasten um 90° zu verschwenken ist, wobei eine Distanzrippe (31) in einen Ausweichraum (32) eintaucht.

12. Sägetisch nach einem der vorhergehenden Ansprüche, **dadurch gekennzeichnet, dass** der Sägetisch zwei Beinpaare (34) aufweist, die zum Zusammenfalten des Tisches in eine Parallellage zur Aufspannplatte (1) bringbar sind.

13. Sägetisch nach einem der vorhergehenden Ansprüche, **dadurch gekennzeichnet, dass** die Aufspannplatte (1) und die ihr benachbarte Werkplatte (15) einem gemeinsamen Träger (17) zugeordnet sind.

14. Sägetisch nach Anspruch 13, **dadurch gekennzeichnet, dass** der Träger (17) von Holmen gebildet ist.

## Claims

1. Saw bench with a horizontal clamping plate (1) for the saw, a first guide groove (2), extending parallel to the cutting direction, with undercut walls (3) for displaceable accommodation of a guide rail (6) of a stop (7), having edge sections (5) which engage in the undercuts (4), and with a second guide groove (8), extending crosswise to the cutting direction, with undercut walls (9) for displaceable and fixable accommodation of the guide rail (6) of the stop (7), the stop (7) having a stop rail (11) mounted on a swivelling console (10) and the swivelling console (10) being able to be swivelled about a swivel pin (12) in respect of the guide rail (6) and locked in a 90° swivel position, wherein a locking screw (14), penetrating a curved groove (13) of the swivelling console (10) and allocated to the guide rail (6) is provided for friction-locking fixing of the swivel position of the swivelling console (10) to the guide rail (6), **characterised in that** the vertical play of movement of the guide rail (6) in the first groove (2) is greater that that in the second (8), so the stop is freely displaceable in the first groove (2) with the swivelling console (10) secured to the guide rail (6) at an angle and is fixed in position in the second groove (8), as a result of friction-locking contact of the edge sections (5) of the guide rail (6) with the groove walls (9) which takes place when the fastening screw (14) is tightened.

2. Saw bench according to claim 1, **characterised by** a working plate (15) which is adjacent to the clamping plate (1) and to which the first groove (2) is allocated.

3. Saw bench according to one of the preceding claims, **characterised in that** the second groove (8) is allocated to a profiled rail (16) arranged adjacent to the clamping plate (1).

4. Saw bench according to claim 3, **characterised in that** the rail 1 (16) is mounted on a carrier (17) carrying the clamping plate (1), which is swivellable for assembling the saw on its underside.

5. Saw bench according to one of the preceding claims, **characterised in that** the swivelling console (10) consists of plastics material and has a hollow rear side (18), wherein the fronts (19') of the walls (19) of the hollow slide on the working plate (15) or can be braced against the groove edges (8') of the second groove (8).

6. Saw bench according to one of the preceding claims, **characterised by** a swivel cog (20) of the swivelling console (10) projecting into the guide rail (6).

7. Saw bench according to one of the preceding claims, **characterised in that** the stop rail (11) is mounted on the swivelling console (10) as displaceable in its extension direction.

8. Saw bench according to one of the preceding claims, **characterised in that** the stop rail (11) has a C-shaped fastening groove (21) into which a web (22) of the swivelling console (10) projects and in which nuts (23) are located, into which fastening screws (24) are screwed.

9. Saw bench according to claim 8, **characterised in that** the heads of the fastening screws (24) are located in pockets (25) of the swivelling console (10) which are open at the edge.

10. Saw bench according to one of the preceding claims, **characterised in that** the guide rail (5) carries a latch pin holder (26), which is adjustable in position, the springloaded latch pin (27) of which can be fixed in a retracted position and can be locked with a distancing space (30), arranged between two webs (28), of a peripheral curved face (29) of the swivelling console (10).

11. Saw bench according to claim 10, **characterised in that** the latch pin (27) has to be swivelled about 90° for locking, wherein a spacing web (31) is inserted into a deflection space (32).

12. Saw bench according to one of the preceding claims, **characterised in that** the saw bench has two pairs of legs (34), which can be brought into a parallel position to the clamping plate (1) for folding up the bench.

13. Saw bench according to one of the preceding claims, **characterised in that** the clamping plate (1) and the working plate (15) adjacent to it are allocated to a common carrier (17).

14. Saw bench according to claim 13, **characterised in that** the carrier (17) is formed from tie bars.

## Revendications

1. Table à scier avec une plaque de montage (1) horizontale pour la scie, avec une première rainure de guidage (2) s'étendant parallèlement au sens de coupe avec des parois (3) à contre-dépouilles pour le logement coulissant d'un rail de guidage (6), présentant des parties périphériques (5) s'engageant dans les contre-dépouilles (4), d'une butée (7) et avec une seconde rainure de guidage (8) s'étendant transversalement au sens de coupe avec des parois (9) à contre-dépouilles pour le logement coulissant et blocable du rail de guidage (6) de la butée (7), la butée présentant un rail de butée (11) fixé sur une console basculante (10) et la console basculante (10) pouvant pivoter autour d'un axe de basculement (12) par rapport au rail de guidage (6) et pouvant s'enclencher dans une position de basculement à 90°, une vis de blocage (14) traversant une rainure en arc (13) de la console basculante (10) et correspondant au rail de guidage (6) étant prévue, pour la fixation par frottement de la position de basculement de la console basculante (10) pour le rail de guidage (6), **caractérisée en ce que** le jeu de déplacement vertical du rail de guidage (6) dans la première rainure (2) est supérieur au jeu de déplacement dans le second rail (8), de sorte que la butée dans la première rainure (2) peut être déplacée librement avec la console basculante (10) fixée dans une position d'angle sur le rail de guidage (6), et est fixée en position dans la deuxième rainure (8) en raison de l'appui avec frottement des parties périphériques (5) du rail de guidage (6) sur les parois de rainure (9) qui se produit lors du serrage de la vis de blocage (14).

2. Table à scier selon la revendication 1, **caractérisée par** une plaque de travail (15) voisine de la plaque de montage (1), et correspondant à la première rainure (2).

3. Table à scier selon l'une quelconque des revendications précédentes, **caractérisée en ce que** la seconde rainure (8) est attribuée à un rail profilé (16) disposé à proximité de la plaque de montage (1).

4. Table à scier selon la revendication 3, **caractérisée en ce que** le rail (16) est fixé sur un support (17) portant la plaque de montage (1) pouvant basculer sur son côté inférieur pour le montage de la scie.

5. Table à scier selon l'une quelconque des revendications précédentes, **caractérisée en ce que** la console basculante (10) est à base de plastique et présente un côté arrière (18) creux, les côtés avant (19') des parois en creux (19) étant glissants contre la plaque de travail (15) et pouvant être tendus contre les bords de rainure (8') de la seconde rainure (8).

6. Table à scier selon l'une quelconque des revendications précédentes, **caractérisée par** un tenon de basculement (20), dépassant dans le rail guidage (6) de la console basculante (10).

7. Table à scier selon l'une quelconque des revendications précédentes, **caractérisée en ce que** le rail de butée (11) est fixé sur la console basculante (10) de façon à pouvoir coulisser dans sa direction d'étirement.

8. Table à scier selon l'une quelconque des revendications précédentes, **caractérisée en ce que** le rail de butée (11) présente une rainure de fixation (21) en forme de C dans laquelle une nervure (22) de la console basculante (10) dépasse et des écrous (23) sont emboîtés, dans lesquels des vis de fixation (24) sont fixées.

9. Table à scier selon la revendication 8, **caractérisée en ce que** les têtes des vis de fixation (24) sont disposées dans des poches (25) ouvertes sur le bord de la console basculante (10).

10. Table à scier selon l'une quelconque des revendications précédentes, **caractérisée en ce que** le rail de guidage (5) porte un support de goupille d'arrêt (26) réglable en position, dont la goupille d'arrêt (27) sollicitée par ressort peut être fixée dans une position reculée et peut être enclenchée avec un compartiment d'espacement (30), disposé entre deux nervures (28), d'une surface en arc périphérique (29) de la console basculante (10).

11. Table à scier selon la revendication 10, **caractérisée en ce que** la goupille d'arrêt (27) est basculée de 90° pour l'enclenchement, une nervure d'espacement (31) plongeant dans un espace d'évitement (32).

12. Table à scier selon l'une quelconque des revendications précédentes, **caractérisée en ce que** la table à scier présente deux paires de pieds (34), qui peuvent être amenées dans une position parallèle à la plaque de montage (1) pour le repliage de la table.

13. Table à scier selon l'une quelconque des revendications précédentes, **caractérisée en ce que** la plaque de montage (1) et la plaque de travail (15) voisine de la première sont attribuées à un support (27) commun.

14. Table à scier selon la revendication 13, **caractérisée en ce que** le support (17) est formé de montants.
